# EUROPEAN PATENT APPLICATION

(11) **EP 4 622 225 A1**
(43) Date of publication of application: **24.09.2025**
(21) Application number: 23910171.0
(22) Date of filing: 14.12.2023
(51) Int. Cl.: H04L 69/16

(54) **DATA TRANSMISSION METHOD AND APPARATUS**

(30) Priority: 28.12.2022 CN 202211699510
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2023/138713
(87) International publication number: WO 2024/140241

(57) **Abstract**

This application provides a data transmission method and apparatus, which are applicable to a logical channel prioritization process, especially when a same service is transmitted on a plurality of logical channels. The data transmission method includes: receiving first configuration information, and configuring a priority, a first PBR, and a first BSD of each logical channel in a plurality of logical channels; receiving association indication information and first indication information, where the association indication information indicates at least two first logical channels; determining, based on at least one of the first PBR, the first BSD, and the first indication information, a quantity of tokens in at least one first token bucket corresponding to the at least two first logical channels; and determining, based on the quantity of tokens and a priority of each logical channel in the at least two first logical channels, transmission resources corresponding to the at least two first logical channels. By using the foregoing method, it is guaranteed that an overall service rate meets an expectation, and a case in which a sum of actual rates of the plurality of logical channels is excessively large and a transmission resource of another service is occupied is avoided.

## Description

This application claims priority to Chinese Patent Application No. 202211699510.3, filed with the China National Intellectual Property Administration on December 28, 2022 and entitled "DATA TRANSMISSION METHOD AND APPARATUS", which is incorporated herein by reference in its entirety.

### TECHNICAL FIELD

This application relates to the communication field, and more specifically, to a data transmission method and apparatus.

### BACKGROUND

In a 5th generation (5th generation, 5G) mobile communication new radio (new radio, NR) technology, various types of network deployment and various application types are supported, including a higher-rate and higher-bandwidth access capability, lower-latency and higher-reliability information exchange, larger-scale and lower-cost access and management of a machine type communication device, and the like. To meet the foregoing requirements, 5G defines a network architecture that is based on a quality of service (Quality of Service, QoS) flow, in which data packets of a same QoS flow have a same transmission feature, for example, a same packet loss rate or a same packet delay.

Extended reality (Extended Reality, XR) is a reality and virtuality combined human-computer interactive environment generated by using a computer technology and a wearable device. XR is proposed based on augmented reality (Augmented Reality, AR), mixed reality (Mixed Reality, MR), and virtual reality (Virtual Reality, VR). An XR service aims to use a high-speed network and a technology like 360-degree imaging to achieve interactive immersive experience effect. XR is one of the key 5G multimedia applications in the industry field currently. A data flow of one XR service may include data packets of different importance degrees. A requirement for differentiated processing of data in a same service flow like an XR video service is also referred to as layered quality of service (layered QoS). To meet the layered QoS requirement, data of different importance degrees may be mapped to different logical channels for transmission. However, in a current logical channel prioritization (Logical Channel Prioritization, LCP) process, for example, when the XR service meets the layered QoS requirement, an actual transmission rate is far greater than an expected rate, and consequently transmission resources of another service are excessively occupied.

Therefore, how to enhance the LCP process to guarantee that an overall transmission rate of a service meets an expectation is an urgent problem to be resolved.

### SUMMARY

This application provides a data transmission method and apparatus. When data of a same service is transmitted through a plurality of logical channels, an enhanced LCP process guarantees that an overall rate of the service meets an expectation, and a case in which an actual rate of the service is excessively high due to an excessively large sum of PBRs of the plurality of logical channels and a transmission resource of another service is occupied is avoided.

According to a first aspect, a data transmission method is provided. The method is applicable to a first apparatus, and includes: receiving first configuration information, where the first configuration information is used to configure a priority of each logical channel in a plurality of logical channels, a first prioritized bit rate PBR of each logical channel, and a first bucket size duration BSD of each logical channel; receiving association indication information and first indication information, where the association indication information indicates at least two first logical channels in the plurality of logical channels; determining, based on at least one of the first PBR, the first BSD, and the first indication information, a quantity of tokens in at least one first token bucket corresponding to the at least two first logical channels; and determining, based on the quantity of tokens in the at least one token bucket and a priority of each logical channel in the at least two first logical channels, transmission resources corresponding to the at least two first logical channels.

The plurality of configured logical channels are logical channels used by the first apparatus, and the at least two first logical channels are logical channels used to transmit a same service.

It should be understood that the same service transmitted on the at least two first logical channels may correspond to a same data radio bearer (Data Radio Bearer, DRB), and a same service flow may also be split into two QoS flows, so that the at least two first logical channels may alternatively correspond to two DRBs. This is not limited in this application.

Optionally, the association indication information may be implicit.

For example, the association indication information may indicate a plurality of logical channels corresponding to a same DRB.

Optionally, the association indication information may be explicit.

For example, the association indication information may carry IDs of at least two first logical channels that need to be indicated.

For example, the association indication information may carry one parameter in information about each logical channel, and the parameter indicates whether the logical channel belongs to the at least two indicated first logical channels.

It should be understood that the association indication information may be radio resource control (Radio Resource Control, RRC) signaling, or may be other information indicating an association relationship between logical channels.

With reference to the first aspect, in some implementations of the first aspect, a quantity of the at least one first token bucket is 1.

Optionally, the method includes: determining a second PBR of each first logical channel in the at least two first logical channels and a second BSD of each first logical channel in the at least two first logical channels based on the at least one of the first PBR, the first BSD, and the first indication information, where the at least two first logical channels correspond to one second PBR, and the at least two first logical channels correspond to one second BSD; and determining, based on the second PBR and the second BSD, the quantity of tokens in the at least one first token bucket corresponding to the at least two first logical channels.

It should be understood that the at least two first logical channels used to transmit the same service share one token bucket, and a PBR and a BSD of the shared token bucket may be directly indicated and determined by using the first indication information, or may be jointly determined by using the first PBR, the first BSD, and the first indication information.

For example, one first token bucket may use a first PBR and a first BSD of a token bucket corresponding to a logical channel with a highest priority in the at least two first logical channels.

It should be understood that a quantity of tokens in a first token bucket may be determined by using a second PBR and a second BSD of the corresponding first token bucket. During resource allocation, if a quantity of tokens taken away after resources are allocated to a logical channel with a higher priority in the at least two first logical channels causes a quantity of tokens in a public first token bucket to be less than zero, a logical channel with a lower priority in the at least two first logical channels cannot participate in a first-round allocation.

According to the solution of this application, in a token bucket sharing manner, a plurality of logical channels used to transmit a same service share one second PBR and one second BSD, so that an expected service guaranteed rate is ensured, and a case in which the service rate is excessively high and a transmission resource of another service is preempted is avoided. In addition, data of each LCH uses a token as required, avoiding a case in which no token is available due to a proportion problem.

With reference to the first aspect, in some implementations of the first aspect, a token that is in a first token bucket corresponding to a logical channel with a higher priority in the at least two first logical channels and that exceeds a maximum capacity of the first token bucket is added to a first token bucket corresponding to a logical channel with a lower priority in the at least two first logical channels based on the first indication information, where the maximum capacity of the token bucket is determined based on the first PBR and the first BSD.

It should be understood that, when a token in a token bucket corresponding to the logical channel with a higher priority in the at least two first logical channels used to transmit the same service overflows, the overflowed token is added to a token bucket corresponding to the logical channel with a lower priority based on the first indication information. In other words, data of the logical channel with a lower priority can obtain a resource only when data of the logical channel with a higher priority is fully guaranteed.

According to the solution of this application, when data of a same service is transmitted through a plurality of logical channels, if a token in a token bucket of a logical channel with a higher priority overflows, the overflowed token may be placed into a token bucket of a logical channel with a lower priority. This manner guarantees that an overall service rate meets an expectation, and can better guarantee transmission of higher-priority data. In other words, the higher-priority data is allowed to preferentially use a majority of tokens. When a quantity of tokens is sufficient, the tokens can be used to support transmission of lower-priority data. This avoids a case in which transmission of lower-priority data cannot be guaranteed due to improper PBR setting.

With reference to the first aspect, in some implementations of the first aspect, the method further includes: when a quantity of tokens in a first token bucket corresponding to a logical channel in the at least two first logical channels is greater than or equal to a first threshold, adjusting a first PBR of each first logical channel in the at least two first logical channels based on the first indication information; or when a quantity of tokens in a token bucket corresponding to a logical channel in the at least two first logical channels is less than or equal to a second threshold, adjusting a first PBR of each first logical channel in the at least two first logical channels based on the first indication information; determining, based on an adjusted first PBR and the first BSD, the quantity of tokens in the at least one first token bucket corresponding to the at least two first logical channels; and determining, based on the quantity of tokens in the at least one token bucket and the priority of each logical channel in the at least two first logical channels, the transmission resources corresponding to the at least two first logical channels.

Optionally, when a quantity of tokens in a first token bucket corresponding to a logical channel in the at least two first logical channels is greater than or equal to a first threshold for a first time period, a first PBR of each first logical channel in the at least two first logical channels is adjusted based on the first indication information; or when a quantity of tokens in a token bucket corresponding to a logical channel in the at least two first logical channels is less than or equal to a second threshold for a first time period, a first PBR of each first logical channel in the at least two first logical channels is adjusted based on the first indication information; the quantity of tokens in the at least one first token bucket corresponding to the at least two first logical channels is determined based on an adjusted first PBR and the first BSD; and the transmission resources corresponding to the at least two first logical channels are determined based on the quantity of tokens in the at least one token bucket and the priority of each logical channel in the at least two first logical channels.

The first threshold, the second threshold, and the first time period may all be configured by using RRC signaling.

For example, the first threshold, the second threshold, and the first time period may be configured in a configuration information element of the logical channel.

Optionally, the adjusted first PBR is greater than or equal to 0.

It should be understood that, if a first PBR obtained after a PBR of a logical channel is adjusted is less than 0, no adjustment is performed, in other words, the adjusted first PBR is not less than 0.

Optionally, adjusting the first PBR of each first logical channel in the at least two first logical channels based on the first indication information includes: when a quantity of tokens in a token bucket corresponding to a first logical channel is less than or equal to the first threshold, increasing a first PBR corresponding to the first logical channel, and decreasing a first PBR corresponding to another logical channel in the at least two associated logical channels; or when a quantity of tokens in a token bucket corresponding to a first logical channel is greater than or equal to the first threshold, decreasing a first PBR corresponding to the first logical channel, and increasing a first PBR corresponding to another logical channel in the at least two first logical channels.

Optionally, adjusting the first PBR of each first logical channel in the at least two first logical channels based on the first indication information includes: when a quantity of tokens in a token bucket corresponding to a first logical channel is less than or equal to the first threshold for the first time period, increasing a first PBR corresponding to the first logical channel, and decreasing a first PBR corresponding to another logical channel in the at least two associated logical channels; or when a quantity of tokens in a token bucket corresponding to a first logical channel is greater than or equal to the first threshold for the first time period, decreasing a first PBR corresponding to the first logical channel, and increasing a first PBR corresponding to another logical channel in the at least two first logical channels.

Optionally, the first PBR is adjusted based on a first step, where the first step is determined based on the first indication information.

It should be understood that the first PBR may be increased and decreased based on the first step, and the first step may be configured by using the RRC signaling.

For example, the first step may be configured in the configuration information element of the logical channel.

Optionally, the method further includes: adjusting the first PBR of each first logical channel in the at least two first logical channels to a third PBR, where the third PBR is determined based on the first indication information.

It should be understood that the third PBR is a PBR level preset based on the first indication information, and the third PBR may be configured by using the RRC signaling.

For example, the third PBR may be configured in the configuration information element of the logical channel.

For example, the third PBR may be configured in a configuration information element of a DRB.

According to the solution of this application, when data of a same service is transmitted through a plurality of logical channels, PBR values of the plurality of logical channels may be adjusted based on a quantity of tokens. In this manner, dynamic allocation of tokens within a service can be implemented while an overall service rate is guaranteed to meet an expectation. When remaining tokens of a logical channel are insufficient, a PBR of the logical channel can be increased to quickly supplement tokens. In addition, a PBR of another logical channel can be decreased to avoid a case in which the overall service rate is excessively high and a resource of another service is preempted.

With reference to the first aspect, in some implementations of the first aspect, the method further includes: determining a PBR factor, where the PBR factor is a proportion of an amount of data that needs to be transmitted on each logical channel in the at least two first logical channels in a total amount of data; determining a fourth PBR of each logical channel in the at least two first logical channels based on the first PBR, the first indication information, and the PBR factor; determining, based on the fourth PBR and the first BSD, the quantity of tokens in the at least one first token bucket corresponding to the at least two first logical channels; and determining, based on the quantity of tokens in the at least one first token bucket and priorities of the at least two first logical channels, the transmission resources corresponding to the at least two first logical signals.

The fourth PBR is equal to a product of the first PBR and the PBR factor.

It should be understood that the PBR factor may be obtained through identification by a packet data convergence protocol (Packet Data Convergence Protocol, PDCP) entity or an application layer.

An occasion for determining the PBR factor may be decided by implementation of the first apparatus.

For example, when new data arrives, the PBR factor may be determined, the PBR factor may be determined based on a specific periodicity, or when a data proportion changes greatly, the PBR factor may be determined.

According to the solution of this application, when data of a same service is transmitted through a plurality of logical channels, a higher layer, for example, a PDCP layer or the application layer, indicates the PBR factor of the logical channel, and the logical channel actually places tokens at a rate of a configured PBR×PBR factor. In this manner, tokens can be dynamically allocated within a service. When the higher layer perceives that a proportion of a type of data in the service becomes higher, the higher layer may indicate that a corresponding logical channel uses a higher PBR, and another logical channel uses a lower PBR. Tokens allocated to various types of data match proportions of the data. This guarantees that the overall service rate meets an expectation, and also relatively fairly guarantees various types of data in the service. In addition, when related LCHs are associated with different MAC entities, the foregoing solution does not require interaction between the MAC entities, and implementation difficulty is low.

According to a second aspect, a data transmission method is provided. The method is applicable to a second apparatus, and includes: sending first configuration information, where the first configuration information is used to configure a priority of each logical channel in a plurality of logical channels, a first PBR of each logical channel, and a first BSD of each logical channel; and sending association indication information and first indication information, where the association indication information indicates at least two first logical channels in the plurality of logical channels, and the first indication information is used to determine a quantity of tokens in at least one first token bucket corresponding to the at least two first logical channels, where the quantity of tokens in the at least one token bucket is used together with a priority of each logical channel in the at least two first logical channels to determine transmission resources corresponding to the at least two first logical channels.

With reference to the second aspect, in some implementations of the second aspect, a quantity of the at least one first token bucket is 1.

Optionally, the first indication information is further used to determine a second PBR of each first logical channel in the at least two first logical channels and a second BSD of each first logical channel in the at least two first logical channels, where the at least two first logical channels correspond to one second PBR, and the at least two first logical channels correspond to one second BSD; and the second PBR and the second BSD are used to determine the quantity of tokens in the at least one first token bucket corresponding to the at least two first logical channels.

With reference to the second aspect, in some implementations of the second aspect, the first indication information indicates to add, to a first token bucket corresponding to a logical channel with a lower priority in the at least two first logical channels, a token that is in a first token bucket corresponding to a logical channel with a higher priority in the at least two first logical channels and that exceeds a maximum capacity of the first token bucket, where the maximum capacity of the token bucket is determined based on the first PBR and the first BSD.

With reference to the second aspect, in some implementations of the second aspect, the first indication information is used to: when a quantity of tokens in a first token bucket corresponding to a logical channel in the at least two first logical channels is greater than or equal to a first threshold, adjust a first PBR of each first logical channel in the at least two first logical channels; or when a quantity of tokens in a token bucket corresponding to a logical channel in the at least two first logical channels is less than or equal to a second threshold, adjust a first PBR of each first logical channel in the at least two first logical channels, where an adjusted first PBR and the first BSD are used to determine the quantity of tokens in the at least one first token bucket corresponding to the at least two first logical channels; and the quantity of tokens in the at least one token bucket and the priority of each logical channel in the at least two first logical channels are used to determine the transmission resources corresponding to the at least two first logical channels.

Optionally, the first indication information is used to: when a quantity of tokens in a first token bucket corresponding to a logical channel in the at least two first logical channels is greater than or equal to a first threshold for a first time period, adjust a first PBR of each first logical channel in the at least two first logical channels; or when a quantity of tokens in a token bucket corresponding to a logical channel in the at least two first logical channels is less than or equal to a second threshold for a first time period, adjust a first PBR of each first logical channel in the at least two first logical channels, where an adjusted first PBR and the first BSD are used to determine the quantity of tokens in the at least one first token bucket corresponding to the at least two first logical channels; and the quantity of tokens in the at least one token bucket and the priority of each logical channel in the at least two first logical channels are used to determine the transmission resources corresponding to the at least two first logical channels.

Optionally, the adjusted first PBR is greater than or equal to 0.

Optionally, the first PBR is adjusted based on a first step, where the first step is determined based on the first indication information.

Optionally, the first indication information is used to adjust the first PBR of each first logical channel in the at least two first logical channels to a third PBR, where the third PBR is determined based on the first indication information.

With reference to the second aspect, in some implementations of the second aspect, the first indication information indicates a first apparatus to determine a fourth PBR of each logical channel in the at least two first logical channels based on the first PBR and a PBR factor, where the PBR factor is a proportion of an amount of data that needs to be transmitted on each logical channel in the at least two first logical channels in a total amount of data; the fourth PBR and the first BSD are used to determine the quantity of tokens in the at least one first token bucket corresponding to the at least two first logical channels; and the quantity of tokens in the at least one first token bucket and the priorities of the at least two first logical channels are used to determine the transmission resources corresponding to the at least two first logical signals.

According to a third aspect, a data transmission apparatus is provided, including a receiving unit and a processing unit that are configured to support a communication device in performing functions of the communication device in the first aspect and the implementations of the first aspect. The functions may be implemented by hardware, or may be implemented by hardware by executing corresponding software. The hardware or the software includes one or more modules corresponding to the functions.

According to a fourth aspect, a data transmission apparatus is provided, including a processor and a transceiver that are configured to support a communication device in performing corresponding functions in the foregoing method. The processor and the transceiver are communicatively connected. The transceiver is configured to perform specific signal receiving and sending under driving of the processor. The processor is configured to invoke instructions to implement the data transmission method according to the first aspect and the implementations of the first aspect.

According to a fifth aspect, a data transmission apparatus is provided, including a sending unit and a processing unit that are configured to support a communication device in performing functions of the network device in the second aspect and the implementations of the second aspect. The functions may be implemented by hardware, or may be implemented by hardware by executing corresponding software. The hardware or the software includes one or more modules corresponding to the functions.

According to a sixth aspect, a data transmission apparatus is provided, including a processor and a transceiver that are configured to support a communication device in performing corresponding functions in the foregoing method. The processor and the transceiver are communicatively connected. The transceiver is configured to perform specific signal receiving and sending under driving of the processor. The processor is configured to invoke instructions to implement the data transmission method according to the second aspect and the implementations of the second aspect.

According to a seventh aspect, a communication system is provided, including the communication device provided in the third aspect or the fourth aspect, and the communication apparatus provided in the fifth aspect or the sixth aspect. The communication system may complete the data transmission method according to any one of the first aspect and the second aspect or the possible implementations of the first aspect and the second aspect.

According to an eighth aspect, a computer-readable storage medium is provided. The computer-readable storage medium is configured to store a computer program. The computer program includes instructions for performing the method according to any one of the first aspect and the second aspect or the possible implementations of the first aspect and the second aspect.

According to a ninth aspect, a system chip is provided, including a processing unit and a communication unit. The processing unit can execute computer instructions, to enable a chip in a terminal to perform the method according to any one of the first aspect to the fourth aspect or the possible implementations of the first aspect to the fourth aspect.

According to a tenth aspect, a computer program product is provided. The product includes instructions for performing the method according to any one of the first aspect to the fourth aspect or the possible implementations of the first aspect to the fourth aspect.

According to an eleventh aspect, a chip system is provided, including a memory and a processor. The memory is configured to store a computer program. The processor is configured to: invoke the computer program from the memory and run the computer program, to enable a communication device on which the chip system is installed to perform the method according to any one of the first aspect or the second aspect or the possible implementations of the first aspect or the second aspect.

The chip system may include an input circuit or interface configured to send information or data, and an output circuit or interface configured to receive information or data.

### BRIEF DESCRIPTION OF DRAWINGS

FIG. 1 is a diagram of a communication system applicable to an embodiment of this application;
FIG. 2 is a schematic flowchart of an implementation of a token bucket algorithm;
FIG. 3 is a diagram of a video frame coding scheme of an XR service;
FIG. 4 is a diagram of transmission of a token bucket algorithm for transmitting an XR service;
FIG. 5 is a schematic flowchart of a data transmission method according to an embodiment of this application;
FIG. 6 is a schematic flowchart of another data transmission method according to an embodiment of this application;
FIG. 7 is a simple diagram of transmitting an XR service by using a method according to an embodiment of this application;
FIG. 8 is a schematic flowchart of another data transmission method according to an embodiment of this application;
FIG. 9 is a simple diagram of transmitting an XR service by using another method according to an embodiment of this application;
FIG. 10 is a schematic flowchart of another data transmission method according to an embodiment of this application;
FIG. 11 is a simple diagram of transmitting an XR service by using another method according to an embodiment of this application;
FIG. 12 is a schematic flowchart of another data transmission method according to an embodiment of this application;
FIG. 13 is a simple diagram of transmitting an XR service by using another method according to an embodiment of this application;
FIG. 14 is a block diagram of an example of a wireless communication apparatus according to this application; and
FIG. 15 is a diagram of a structure of an example of a terminal device according to this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or an evolved communication system such as new radio (New Radio, NR), vehicle-to-everything (vehicle-to-X V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an internet of vehicles, machine type communication (machine type communication, MTC), an internet of things (Internet of things, IoT), long term evolution-machine (long term evolution-machine, LTE-M), machine-to-machine (machine-to-machine, M2M), device-to-device (device-to-device, D2D), and the like.

In embodiments of this application, a first apparatus may be a terminal device, and a second apparatus may be a network device.

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in an evolved public land mobile network (Public Land Mobile Network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a telematics box (telematics box, T-box), a chip, a system on chip (system on chip, SoC), or the like. The chip or the SoC may be installed in a vehicle, an OBU, an RSU, or a T-box.

The terminal device in embodiments of this application further includes at least any one of user equipment, an augmented reality (augmented reality, AR)/virtual reality (virtual reality, VR)/extended reality (extended reality, XR) device, a wearable device, a smart home appliance terminal, a terminal device and a communication module of the terminal device, a mobile phone and a communication module of the mobile phone, a vehicle and a communication module of the vehicle, an information processing device, a display device, a network apparatus, a base station, a TRP, customer premise equipment (customer premise equipment, CPE), a router, a network access device, and the like. In terms of Uu (UTRAN-to-terminal device) air interface transmission, both parties of wireless communication include a network apparatus and a user communication device. In terms of SL air interface transmission, a receiving end and a transmitting end of wireless communication are both user communication devices. The network apparatus may be a conventional macro base station eNB in a conventional UMTS/LTE wireless communication system, may be a micro base station eNB in a heterogeneous network (heterogeneous network, HetNet) scenario, may be a baseband unit (baseband unit, BBU) and a remote radio unit (remote radio unit, RRU) in a distributed base station scenario, may be a baseband pool BBU pool and a radio frequency unit RRU in a CRAN scenario, or may be a gNB in a wireless communication system.

In embodiments of this application, the network device may be any device with wireless receiving and sending functions. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, may be 5G, for example, NR, a gNB in a system, or a transmission point (TRP or TP), or one antenna panel or one group of antenna panels (including a plurality of antenna panels) of a base station in a 5G system, or may be a network node that forms a gNB or a transmission point, for example, a baseband unit (BBU), a distributed unit (distributed unit, DU), or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an radio access network (radio access network, RAN), or the CU may be classified into a network device in a core network (core network, CN). This is not limited in this application.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

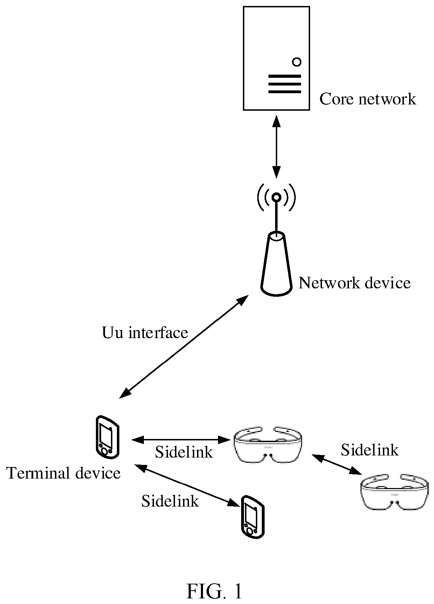

FIG. 1 is a diagram of a communication system applicable to an embodiment of this application.

As shown in FIG. 1, a terminal device may establish an air interface connection to a network device (for example, a next generation NodeB (NR NodeB, gNB)) through a Uu interface, to transmit signaling, data, or the like, and then the terminal device is connected to a data network by using the network device. The network device is mainly configured to implement functions such as a radio physical layer function, resource scheduling and radio resource management, radio access control, and mobility management. The network device is connected to a core network through an S1 interface. The core network is mainly used for device registration, security authentication, mobility management, and location management of the terminal device, establishment of a channel to the terminal device, forwarding, on the channel, a data packet between the terminal device and an external data network, and the like.

It should be understood that FIG. 1 is merely a diagram, and another device that is not shown may be further included. In addition, a quantity of terminal devices and a quantity of network devices included in the communication system are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in this application is not particularly limited in this application, provided that communication can be performed according to the method provided in embodiments of this application by running a program that records code of the method provided in this application. For example, the method provided in embodiments of this application may be executed by a terminal device or a network device, or a functional module that is in the terminal device or the network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include, but is not limited to, a magnetic storage device (for example, a hard disk, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

For ease of understanding embodiments of this application, concepts and technologies involved in embodiments of this application are briefly introduced first.

It should be understood that related terms and explanations below are universal in all embodiments in this specification. Different embodiments may be used independently, or may be used in combination based on some internal or external relationships. Different implementations in embodiments may be used independently or in combination.

### 1. Multiplexing (multiplexing) of a service data unit SDU, a protocol data unit PDU, and a medium access control (medium access control, MAC) layer

The service data unit (service data unit, SDU) is also referred to as a service data unit, and is a data set of a user service at a specified layer. After being sent to a lower layer, the service data unit is encapsulated at the lower layer in the protocol data unit (protocol data unit, PDU) and the PDU is sent out. For each layer, an information unit from a higher layer is referred to as an SDU at the layer, and an information unit processed at the layer and sent to a lower layer is referred to as a PDU at the layer. An SDU is an information unit transmitted from a higher protocol layer to a lower protocol layer. For example, an SDU at the N^{th} layer is in one-to-one correspondence with a PDU at an upper layer of the N^{th} layer.

Specifically, the SDU refers to an amount of information that is received from an entity at an (N+1)^{th} layer, that is not processed by an entity at the N^{th} layer, and whose identifier is remained.

The PDU is a specific data unit at an N protocol layer, and includes protocol control information of the N protocol layer and possible user data at the N protocol layer. A transmit end may multiplex data on a plurality of logical channels into one transport channel (transport channel, TCH), that is, multiplex a plurality of MAC SDUs into one MAC PDU, through a multiplexing function of the MAC layer, and send out the data through a physical layer.

For ease of description, that the transmit end multiplexes a plurality of MAC SDUs into one MAC PDU through the MAC layer is referred to as "MAC layer multiplexing" or "multiplexing SDUs into a PDU" for short as follows. It should be understood that the terminal device can send only one MAC PDU at one transmission time interval T (without considering spatial multiplexing and carrier aggregation). Therefore, MAC SDUs of a plurality of logical channels need to be multiplexed into a same MAC PDU. This is an origin of MAC layer multiplexing.

When there is data to be sent on the plurality of logical channels, and a total amount of data on the plurality of logical channels exceeds a transmission capability of a current time interval T, a problem of which logical channel should be preferentially sent occurs, and priorities of the logical channels needs to be determined. During downlink transmission, the network device may determine a priority of a logical channel based on a type of the logical channel and a quality of service (Quality of Service, QoS) parameter of a bearer corresponding to the logical channel. There is a higher probability that a logical channel with a higher priority is multiplexed at the MAC layer, and therefore the logical channel may obtain more transmission opportunities. This means a higher transmission rate or a lower transmission delay. During uplink transmission, the network device may allocate an uplink resource based on a request of the terminal device and an amount of to-be-sent data. However, the uplink resource allocated by the network device is specific to the terminal device, and is not specific to the logical channel. The following mainly describes a case of uplink transmission in detail. Because the SDU is from the logical channel, for the uplink transmission, "MAC layer multiplexing" may be understood as "the terminal device allocates the uplink resource to the logical channel".

When the terminal device needs to send uplink data, the terminal device may notify, by using a buffer status report (buffer status report, BSR), the network device of a specific amount of data that needs to be sent in an uplink buffer (buffer) of the terminal device, so that the network device configures the uplink resource for the terminal device. To reduce a quantity of information bits transmitted through an air interface, it is specified in the protocol that each logical channel group (logical channel group, LCG) corresponds to one BSR value, and each logical channel group includes one or more logical channels. LCG classification varies based on implementations of different vendors. Generally, services carried on logical channels in a same LCG have an approximate QoS requirement. Therefore, a single LCG may include logical channels of different network slices, and consequently the network device cannot obtain data amount information of each network slice based on the BSR. After the terminal device reports the BSR, the network device may allocate the uplink resource to the terminal device based on the BSR, but it does not specify logical channels for which the allocated uplink resource is used. After obtaining the uplink resource, the terminal device may multiplex MAC SDUs from the logical channels to a MAC PDU based on the priorities of the logical channels, and then send the MAC PDUs through the physical layer.

To avoid a problem in which a logical channel with a lower priority is always out of service, the network device sets one prioritized bit rate (prioritized bit rate, PBR) in a unit of kB/s for each logical channel of the terminal device, to ensure that the terminal device limits a transmission rate of a logical channel with a higher priority in the logical channels, so that a logical channel on which data transmission is performed and that is with a lower priority in the logical channels is served. In other words, if a data transmission rate of a specific logical channel with a higher priority is greater than or equal to a PBR of the logical channel, even if there is still to-be-sent data on the logical channel with a higher priority, the terminal device turns to allocate the uplink resource to a logical channel that is with a lower priority and that does not reach the PBR. In a possible implementation, the terminal device may implement uplink resource allocation by using a token bucket (token bucket) algorithm.

### 2. Token bucket (token bucket) algorithm

The token bucket algorithm is a common rate limit method, and can be compared to an operation process of a bucket (bucket) including tokens. A basic idea of the algorithm is determining, based on whether there is a token in a token bucket and a quantity of tokens, whether to send data on a specific logical channel (logical channel, LCH) and control an amount of data that is on the logical channel and that is multiplexed in the MAC PDU.

After a physical transmission resource is allocated to a sending device, logical channels on which data is transmitted are determined through a logical channel prioritization (Logical Channel Prioritization, LCP) process. The token bucket algorithm is used in the LCP process as a whole. Specifically, the network device may configure the following parameters for each logical channel by sending configuration information (for example, a LogicalChannelConfig information element) to the terminal device:
Priority: The larger a value of this parameter, the lower a priority of the LCH.
Prioritized bit rate (PBR): The PBR is a rate at which tokens are placed into the token bucket.
Bucket size duration (bucketSizeDuartion, BSD): A product of the BSD and the PBR indicates a maximum capacity of the token bucket.

The foregoing priority may also be referred to as a logical channel priority. The logical channel priority decides a sequence of the uplink resource allocation (that is, a multiplexing sequence) when a plurality of logical channels are multiplexed. The PBR indicates a quantity of bytes injected into the bucket per second. The BSD indicates a depth of the bucket, in milliseconds (ms). Therefore, the maximum capacity of the token bucket is PBR×BSD. This limits a total amount of data that can be buffered on each logical channel. However, this does not represent an uplink maximum bit rate of the logical channel. It should be understood that the foregoing configuration information is specific to the logical channel, in other words, one logical channel corresponds to one piece of configuration information, each logical channel has a priority, a PBR, and a BSD of the logical channel, and each logical channel has a token bucket of the logical channel.

The terminal device receives the configuration information sent by the network device, determines a priority, a PBR, and a BSD of each logical channel, and allocates an uplink resource in descending order of priorities according to the token bucket algorithm. After the terminal device allocates the uplink resource according to the token bucket algorithm, if there is a remaining uplink resource and there is to-be-transmitted data on a logical channel, the terminal device further reallocates the uplink resource. Therefore, in this application, the token bucket algorithm is also referred to as a first-round allocation algorithm, and reallocation after the token bucket algorithm is referred to as a second-round allocation algorithm.

First-round allocation algorithm: The terminal device may allocate an uplink resource to each logical channel in descending order of priorities based on a prioritized bit rate of each logical channel, until either of the following conditions is met: The uplink resource is allocated to each logical channel, or the uplink resource is exhausted.

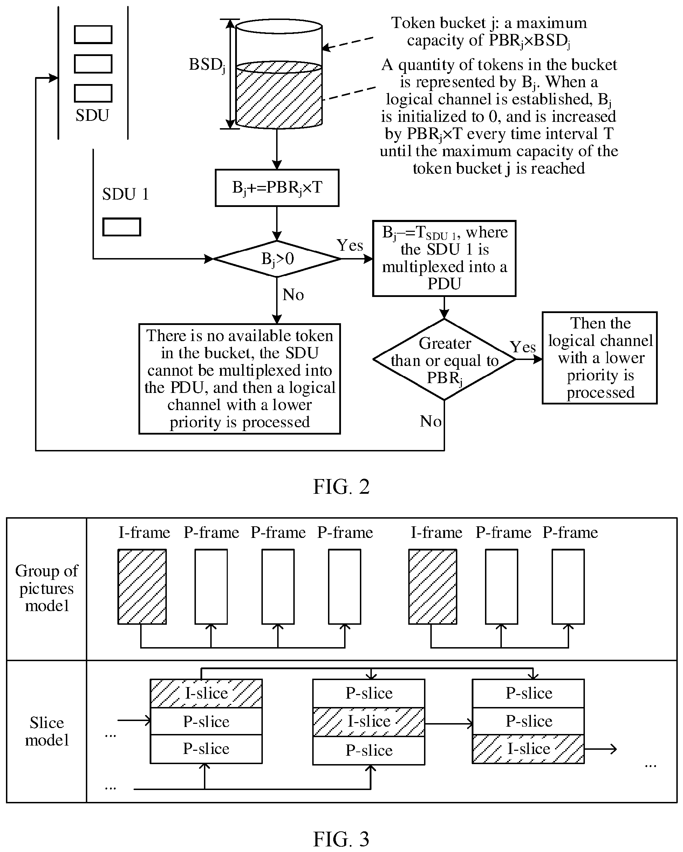

FIG. 2 is a schematic flowchart of an implementation of a token bucket algorithm (that is, a first-round allocation algorithm). The following describes the token bucket algorithm in detail with reference to FIG. 2.

It should be understood that a procedure in FIG. 2 is a possible implementation, and specific implementations and steps may be different. This is not limited in this application.

It is assumed that there are M logical channels in total, M is an integer greater than or equal to 1, and each logical channel in the M logical channels corresponds to one token bucket, that is, each logical channel has a priority, a PBR, and a BSD of the logical channel. A logical channel j is used as an example, where j ∈ {1, 2,···, M}. The logical channel j corresponds to a token bucket j. A terminal device may maintain a variable Bⱼ for the logical channel j. The variable indicates a quantity of currently available tokens in the token bucket j, and each token corresponds to 1-byte data. Bⱼ is initialized to 0 when the logical channel j is established, and a value of Bⱼ cannot exceed a maximum capacity PBRⱼ×BSDⱼ of the token bucket (assuming that PBRⱼ is 8 kBps, BSDⱼ=500 ms, and the maximum capacity is 8 kBps×500 ms=4k bytes). When uplink data needs to be transmitted, the terminal device may execute the token bucket algorithm to allocate an uplink resource, that is, multiplex an SDU into a PDU.

Specifically, the terminal device may perform the following steps on each logical channel in descending order of priorities. The following uses the logical channel j as an example for description.

Step 1: Obtain an SDU 1 in the logical channel j, and determine whether Bⱼ is greater than 0.

Step 2: If Bⱼ is less than 0, it indicates that there is no available token in the token bucket, the SDU 1 cannot be multiplexed into the PDU, a procedure of processing the logical channel j by the terminal device ends, and then a logical channel with a lower priority is processed.

Step 3: If Bⱼ is greater than 0, the terminal device multiplexes the SDU 1 into the PDU, and performs Bⱼ-=T_{SDU 1}, where T_{SDU 1} indicates a data amount of the SDU 1, and Bⱼ-=T_{SPU 1} indicates that the value of Bⱼ is updated to a value of Bⱼ-T_{SDU 1}.

It should be noted that the token bucket algorithm allows Bⱼ to be less than 0. To be specific, before the SDU of the logical channel j is multiplexed into the PDU, Bⱼ>0, and when Bⱼ-T_{SDU}<0, the SDU is not placed in a queue, but sufficient tokens are obtained in a "loan" manner (in this case, Bⱼ-T_{SDU}<0), and the SDU is multiplexed into the PDU. The logical channel j can perform subsequent data transmission only after borrowed tokens are repaid (Bⱼ is increased by PBRⱼ×T every T until Bⱼ>0). In this time period of "loan repayment" (that is, a time period corresponding to Bⱼ<0 to Bⱼ>0), an uplink bit rate of the logical channel does not exceed a PBR of the logical channel.

In addition, for a logical channel with a lower priority, the logical channel j is used as an example, if uplink resources are limited, in the foregoing several Ts, the logical channel j may not be served, but a quantity of tokens in the token bucket of the logical channel j continuously increases with T (not exceeding PBRⱼ×BSDⱼ). For example, it is assumed that an amount of to-be-transmitted data on a logical channel j with a lower priority is 300 bytes, PBRⱼ of the logical channel j is 100 kBps, and BSDⱼ of the logical channel j is 3 ms. In first two Ts, because the uplink resources are limited, the logical channel j is not served, and in a third T, the uplink resources are sufficient. In this case, the quantity of tokens in the token bucket of the logical channel j increases to Bⱼ=100 kBps×3 ms=300, and all to-be-transmitted data of the logical channel j may be sent out. Therefore, in a process of duration of three Ts, 300 bytes of data is transmitted on the logical channel j in total, and an average uplink bit rate is 300 bytes/3 ms=100 kBps. This is consistent with PBRⱼ configured by a network device.

Second-round allocation algorithm: If there are still remaining uplink resources after first-round allocation is performed, and there is to-be-transmitted data on a logical channel, the terminal device may directly allocate the remaining uplink resources in descending order of priorities of logical channels having the to-be-transmitted data, until either of the following conditions is met: All logical channels have no to-be-transmitted data, or the remaining uplink resources are exhausted.

For example, after the first-round allocation, there are remaining uplink resources, and N logical channels in the M logical channels have the to-be-transmitted data, where N is a positive integer less than or equal to M. The terminal device may allocate the remaining uplink resources in descending order of priorities of the N logical channels. A logical channel with a lower priority can be served only when the uplink resources are allocated to data on logical channels with a higher priority and the uplink resources are not exhausted. In other words, in second-round allocation, the terminal device maximizes data transmission on the logical channels with a higher priority.

It should be understood that, in the foregoing two rounds of allocation processes, the terminal device may comply with the following principles:
(1) If an entire SDU can be filled in a remaining PDU, the terminal device should not segment the SDU.
(2) If the terminal device segments the SDU on the logical channel, the terminal device should fill a maximum segment as much as possible based on a magnitude of a remaining resource and a PBR of the logical channel, in other words, the terminal device should maximize data transmission.
(3) If a radio bearer or a logical channel is suspended (a quantity of tokens is less than 0), data of a logical channel corresponding to the radio bearer should not be transmitted in the first-round allocation process.
(4) If PBRs of all logical channels are set to 0 kBps, the terminal device allocates uplink resources in a strict descending order of priorities. In other words, in this case, the terminal device maximally satisfies transmission of data with a higher priority.
(5) If a PBR of a logical channel is configured as infinity (infinity), for example, a PBR of a logical channel corresponding to a signaling radio bearer (signaling radio bearer, SRB), the terminal device considers another logical channel whose priority is lower than that of the logical channel only after the logical channel has no to-be-transmitted data.

It should be understood that a value of Bⱼ in the token bucket algorithm reflects a relative relationship between an actual data transmission rate of an LCH and a PBR. When Bⱼ is a negative value, it indicates that the actual rate of the LCH is greater than the PBR. When Bⱼ reaches a maximum value, it indicates that a token overflows, and the actual rate of the LCH is less than the PBR.

A token bucket mechanism guarantees relative fairness among logical channels during resource allocation. An LCH whose Bⱼ is less than 0 cannot participate in a first-round resource allocation, to avoid a case in which an LCH whose actual rate is already greater than the PBR continues to preempt a resource. The PBR can be considered as a guarantee expectation for the LCH transmission rate. A part of rate that does not exceed the PBR is always met as much as possible, and a part of rate that exceeds the PBR is processed only when resources are sufficient.

### 3. Data burst data burst

Based on 3GPP specifications, a burst refers to a group of data PDUs, for example, an XR service frame, generated and transmitted by an application in an extremely short period of time.

### 4. Extended real XR service

Extended reality (Extended Reality, XR) refers to various virtual-reality combined environments generated by using computing technologies and wearable devices, and human-machine interaction, and specifically includes the following typical forms: augmented reality, mixed reality, and virtual reality.

XR is one of key 5G multimedia applications in the industry field currently. A data flow of one XR service may include data packets of different importance degrees. A video is used as an example. A video frame of an XR service is periodically sent, and each video frame may be divided into one or more data packets for transmission.

As shown in FIG. 3, a video frame may be coded based on a group of pictures (Group Of Pictures, GOP). One GOP includes several consecutive video frames. A 1^{st} frame is referred to as an I-frame (Intra-coded Picture). Intra-frame coding is used and the I-frame includes complete image information. The I-frame can be encoded and decoded independently. Other frames are referred to as P-frames (Predictive-coded Pictures). Predictive coding is used and the P-frame includes only some image information. The P-frame can be encoded and decoded only by using a previous frame. In another coding model, one video frame may be further divided into a plurality of video slices (slices), some slices use the intra-frame coding and are referred to as I-slices, and some slices use the predictive coding and are referred to as P-slices. It can be learned from the foregoing, the I-frame/I-slice is a key for encoding and decoding. Therefore, emphasis should be placed on guaranteeing the I-frame/I-slice in a wireless transmission process, to ensure that a video can be correctly decoded on a receiving side.

This requirement for differentiated processing of data in a same service flow is also referred to as a layered quality of service layered QoS requirement. To meet the layered QoS requirement, data of different importance degrees may be mapped to different logical channels for transmission.

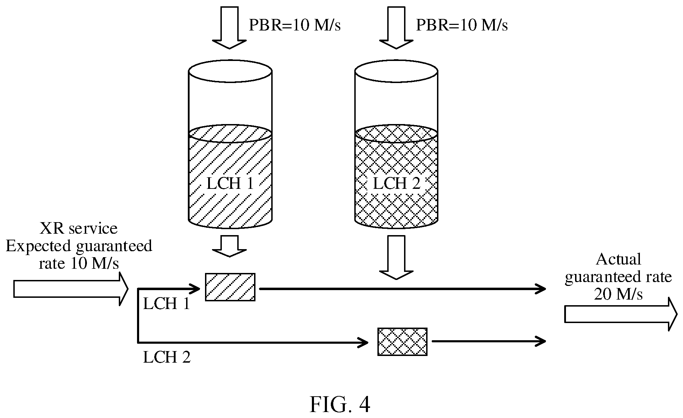

FIG. 4 is a diagram of transmission of a token bucket algorithm for transmitting an XR service.

For example, as shown in FIG. 4, in an LCP process, each LCH has an independent token bucket, and an appropriate PBR may be set based on a QoS requirement of a service carried on the LCH, to control a transmission rate of the service. For example, based on an expected guaranteed rate of the XR service being 10 M/s, a PBR rate of an LCH 1 is set to 10 M/s, and a PBR rate of an LCH 2 is set to 10 M/s, to control a transmission rate of the XR service.

It should be understood that, for the XR service, to implement layered QoS, data of different importance degrees in a same service flow may be respectively transmitted through different LCHs. In this case, although a rate of each LCH may be controlled by using the PBR, for the entire XR service, the transmission rate of the XR service is a sum of rates of a plurality of LCHs, and is not constrained by a PBR of any LCH. Consequently, an actual rate of the XR service is far greater than an expected rate, and a transmission resource of another service may be excessively occupied.

It should be further understood that, proportions of amounts of data of different importance degrees in the XR service are difficult to be determined in advance, and are usually not constant. Therefore, it is also difficult to control the actual rate by setting PBRs of different LCHs in proportion.

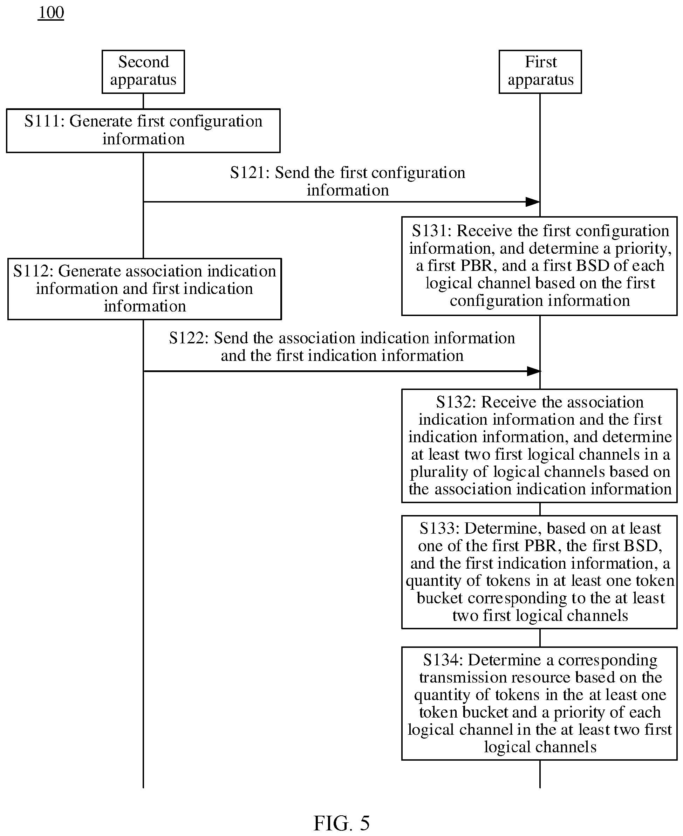

FIG. 5 is a schematic flowchart of a data transmission method according to an embodiment of this application.

The method 100 is shown in FIG. 5. S111: A second apparatus generates first configuration information. S121: The second apparatus sends the first configuration information. S131: Correspondingly, a first apparatus receives the first configuration information, and determines a priority of each logical channel, a first PBR of each logical channel, and a first BSD of each logical channel based on the first configuration information.

S112: The second apparatus generates association indication information and first indication information. S122: The second apparatus sends the association indication information and the first indication information. S132: Correspondingly, the first apparatus receives the association indication information and the first indication information, and determines at least two first logical channels in a plurality of logical channels based on the association indication information.

The at least two determined first logical channels are used to transmit a same service, and the same service may be a voice service, a video service, an XR service, or the like. A same service flow may include data packets of different importance degrees. One data flow may be split into two QoS flows, or may be mapped to two DRBs. This is not limited in this application.

It should be understood that the association indication information may be implicit, for example, may indicate a plurality of logical channels corresponding to a same DRB. Alternatively, the association indication information may be explicit. For example, the association indication information may carry IDs of at least two first logical channels that need to be indicated, or information about each logical channel carries one parameter indicating whether the logical channel belongs to the at least two indicated first logical channels.

S133: The first apparatus determines, based on at least one of the first PBR, the first BSD, and the first indication information, a quantity of tokens in at least one token bucket corresponding to the at least two first logical channels.

S134: The first apparatus determines, based on the quantity of tokens in the at least one token bucket and a priority of each logical channel in the at least two first logical channels, a transmission resource corresponding to each logical channel.

According to this embodiment of this application, a plurality of logical channels used to transmit a same service are associated, and a quantity of tokens is jointly determined by using the first indication information, so that an expected service guaranteed rate can be ensured.

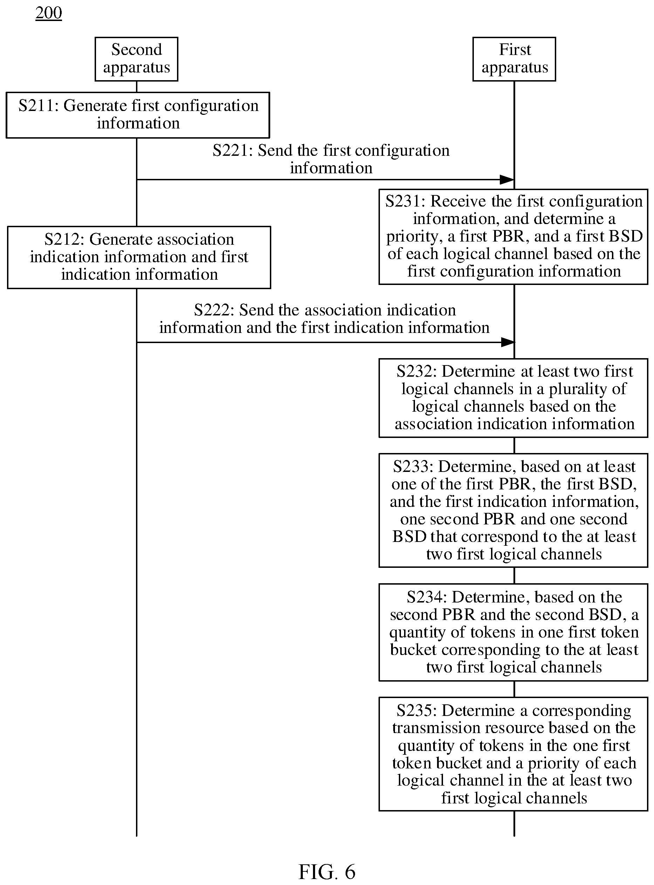

FIG. 6 is a schematic flowchart of another data transmission method according to an embodiment of this application.

The method 200 is shown in FIG. 6. S211: A second apparatus generates first configuration information. S221: The second apparatus sends the first configuration information. S231: Correspondingly, a first apparatus receives the first configuration information, and determines a priority of each logical channel, a first PBR of each logical channel, and a first BSD of each logical channel based on the first configuration information.

S212: The second apparatus generates association indication information and first indication information. S222: The second apparatus sends the association indication information and the first indication information. S232: Correspondingly, the first apparatus receives the association indication information and the first indication information, and determines at least two first logical channels in a plurality of logical channels based on the association indication information.

The at least two determined first logical channels are used to transmit a same service, and the same service may be a voice service, a video service, an XR service, or the like. A same service flow may include data packets of different importance degrees. One data flow may be split into two QoS flows, or may be mapped to two DRBs. This is not limited in this application.

It should be understood that the association indication information may be implicit, for example, may indicate a plurality of logical channels corresponding to a same DRB. Alternatively, the association indication information may be explicit. For example, the association indication information may carry IDs of at least two first logical channels that need to be indicated, or information about each logical channel carries one parameter indicating whether the logical channel belongs to the at least two indicated first logical channels, indicating whether the logical channel shares one second PBR and one second BSD, or indicating that the logical channel uses one corresponding public token bucket.

S233: The first apparatus determines, based on at least one of the first PBR, the first BSD, and the first indication information, one second PBR and one second BSD that correspond to the at least two first logical channels.

It should be understood that the first indication information may indicate that one second PBR and one second BSD of the at least two first logical channels are equal to a first PBR and a first BSD of one logical channel in the at least two first logical channels. In this case, the first apparatus determines, based on the first PBR, the first BSD, and the first indication information, the second PBR and the second BSD that correspond to the at least two first logical channels.

It should be further understood that the first indication information may directly indicate values of a second PBR and a second BSD that need to be configured. In this case, the first apparatus determines, based on the first indication information, the second PBR and the second BSD that correspond to the at least two first logical channels.

S234: The first apparatus determines, based on the second PBR and the second BSD, a quantity of tokens in one first token bucket corresponding to the at least two first logical channels.

S235: The first apparatus determines, based on the quantity of tokens in the one first token bucket and a priority of each logical channel in the at least two first logical channels, a transmission resource corresponding to each logical channel.

According to this embodiment of this application, a plurality of logical channels are configured to share one PBR, so that an expected service guaranteed rate is ensured, and a case in which the service rate is excessively high and a transmission resource of another service is preempted is avoided. In addition, data of each logical channel uses a token as required, avoiding a case in which no token is available due to a proportion problem.

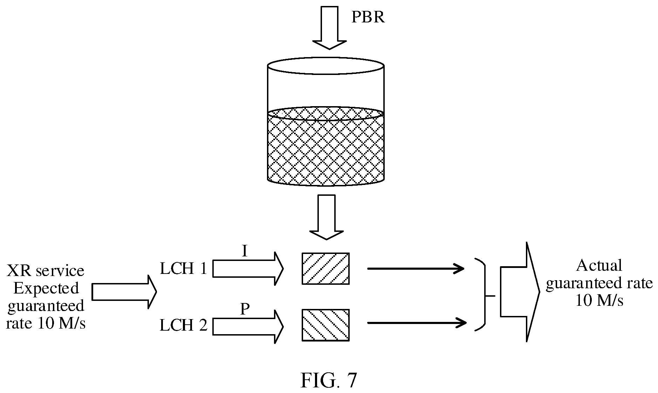

FIG. 7 is a simple diagram of transmitting an XR service by using a method according to an embodiment of this application.

As shown in FIG. 7, the XR service is used as an example, and the XR service is transmitted through two logical channels. For an XR video service based on a GOP coding model, data of an I-frame is transmitted through an LCH 1, data of a P-frame is transmitted through an LCH 2, and an expected guaranteed rate of the video service is 10 Mbps.

After receiving association indication information, based on the LCH 1 and the LCH 2 that are indicated by the association indication information, the first apparatus configures a second PBR and a second BSD for the two logical channels based on first indication information.

In a possible implementation, the second apparatus may send radio resource control (Radio Resource Control, RRC) signaling to the first apparatus, indicate an association between a plurality of logical channels by using the RRC signaling, and indicate that these associated logical channels share one token bucket. The association between LCHs may be indicated in the following two manners:

### Manner 1

The association indication information may implicitly indicate the association between logical channels.

For example, it may be considered that a plurality of logical channels corresponding to a same DRB are associated.

Specifically, logical channels corresponding to RLC entities that carry a same DRB ID in a configuration information element of an RLC bearer are associated.

### Manner 2

The association indication information may explicitly indicate the association between logical channels.

For example, a configuration information element of a logical channel may carry an ID of the logical channel associated with the configuration information element.

For example, the second apparatus may configure one indication parameter in a configuration information element of a DRB or a logical channel. The indication parameter may indicate whether the logical channel is associated with another logical channel, or the indication parameter may indicate whether the logical channel uses a public token bucket.

Therefore, the plurality of logical channels that are indicated to be associated share one public token bucket, and a PBR and a BSD of the public token bucket may be explicitly or implicitly configured by the second apparatus.

For example, the public token bucket may use a PBR and a BSD that are configured for one logical channel with a highest priority in the plurality of associated logical channels.

In a first-round LCP process, a MAC entity allocates resources to the logical channels in descending order of priorities of the logical channels. The plurality of associated logical channels no longer maintain token buckets of the plurality of associated logical channels, and take away corresponding quantities of tokens from the public token bucket during data transmission. For the public token bucket, if a quantity of tokens taken away by a logical channel with a higher priority in the plurality of associated logical channels after the resources are allocated enables Bⱼ of the public token bucket to be less than 0, other LCHs with a lower priority in the plurality of associated LCHs cannot participate in first-round allocation.

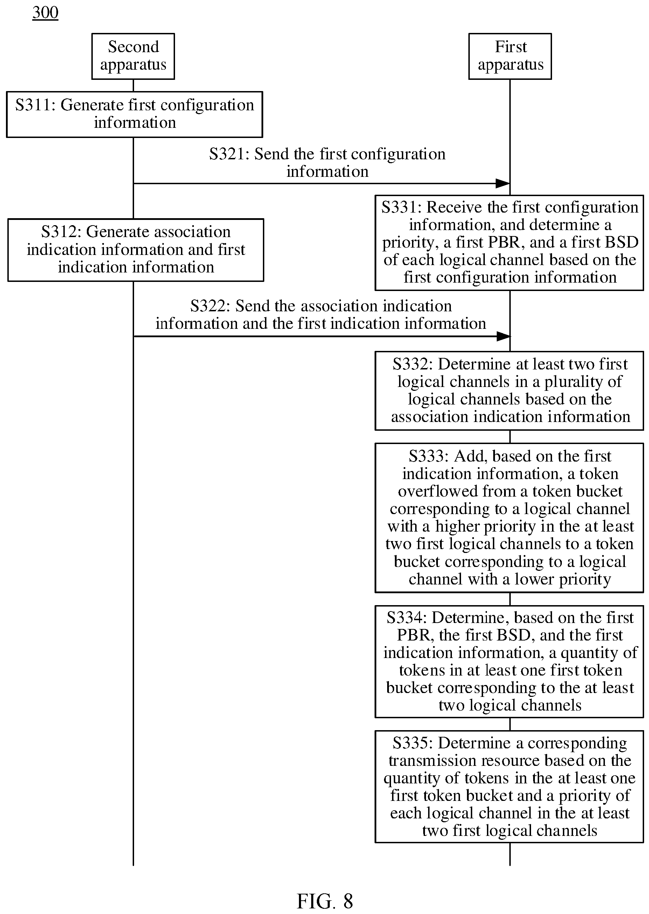

FIG. 8 is a schematic flowchart of another data transmission method according to an embodiment of this application.

The method 300 is shown in FIG. 8. S311: A second apparatus generates first configuration information. S321: The second apparatus sends the first configuration information. S331: Correspondingly, a first apparatus receives the first configuration information, and determines a priority of each logical channel, a first PBR of each logical channel, and a first BSD of each logical channel based on the first configuration information.

S312: The second apparatus generates association indication information and first indication information. S322: The second apparatus sends the association indication information and the first indication information. S332: Correspondingly, the first apparatus receives the association indication information and the first indication information, and determines at least two first logical channels in a plurality of logical channels based on the association indication information.

The at least two determined first logical channels are used to transmit a same service, and the same service may be a voice service, a video service, an XR service, or the like. A same service flow may include data packets of different importance degrees. One data flow may be split into two QoS flows, or may be mapped to two DRBs. This is not limited in this application.

It should be understood that the association indication information may be implicit, for example, may indicate a plurality of logical channels corresponding to a same DRB. Alternatively, the association indication information may be explicit. For example, the association indication information may carry IDs of at least two first logical channels that need to be indicated, or information about each logical channel carries one parameter indicating whether the logical channel belongs to the at least two indicated first logical channels, or indicating whether the logical channel allows a logical channel with a higher priority in the at least two first logical channels to allocate an overflowed token to a logical channel with a lower priority for use when the token overflows.

S333: The first apparatus adds, based on the first indication information, a token overflowed from a token bucket corresponding to a logical channel with a higher priority in the at least two first logical channels to a token bucket corresponding to a logical channel with a lower priority.

S334: The first apparatus determines, based on the first PBR, the first BSD, and the first indication information, a quantity of tokens in at least one first token bucket corresponding to the at least two first logical channels.

S335: The first apparatus determines, based on the quantity of tokens in the at least one first token bucket and a priority of each logical channel in the at least two first logical channels, a transmission resource corresponding to each logical channel.

According to this embodiment of this application, a token overflowed from a logical channel with a higher priority is configured to be placed into a token bucket of a logical channel with a lower priority, so that transmission of higher-priority data can be preferentially guaranteed, and when tokens are sufficient, a redundant token is used for transmission of lower-priority data, to avoid a case in which transmission of lower-priority data cannot be guaranteed due to improper PBR setting.

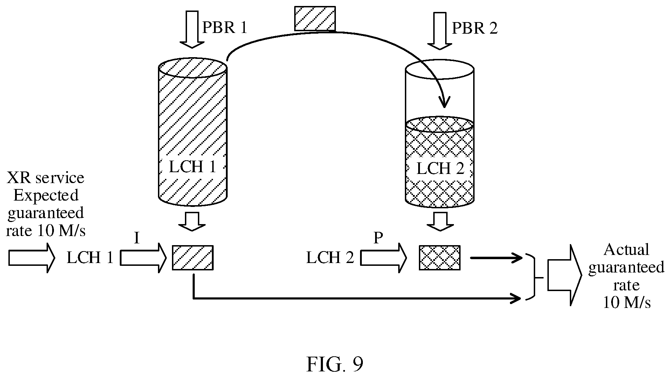

FIG. 9 is a simple diagram of transmitting an XR service by using a method according to an embodiment of this application.

As shown in FIG. 9, the XR service is used as an example, and the XR service is transmitted through two logical channels. For an XR video service based on a GOP coding model, data of an I-frame is transmitted through an LCH 1, and data of a P-frame is transmitted through an LCH 2. A priority of the LCH 1 is higher than that of the LCH 2. An expected guaranteed rate of the video service is 10 Mbps.

After receiving association indication information, based on the LCH 1 and the LCH 2 that are indicated by the association indication information, the first apparatus allows to add, for the two logical channels based on first indication information to a token bucket corresponding to the LCH 2, a token that overflows from a token bucket corresponding to the LCH 1.

In a possible implementation, the second apparatus may send RRC signaling to the first apparatus, and indicate an association between a plurality of logical channels by using the RRC signaling. The association between logical channels may be indicated in the following two manners:

### Manner 1

The association indication information may implicitly indicate the association between logical channels.

For example, it may be considered that a plurality of logical channels corresponding to a same DRB are associated.

Specifically, logical channels corresponding to RLC entities that carry a same DRB ID in a configuration information element of an RLC bearer are associated.

### Manner 2

The association indication information may explicitly indicate the association between logical channels.

For example, a configuration information element of a logical channel may carry an ID of the logical channel associated with the configuration information element.

For example, the second apparatus may configure one indication parameter in a configuration information element of a DRB or a logical channel. The indication parameter may indicate whether the logical channel is associated with another logical channel, or the indication parameter may indicate whether the logical channel allows an overflowed token to be used by a logical channel with a lower priority when the token overflows.

For ease of description, a plurality of logical channels that are indicated to be associated are the LCH 1, the LCH 2, an LCH 3, ..., and an LCH n in descending order of priorities.

In a first-round LCP process, a MAC entity allocates resources to the logical channels in descending order of the priorities of the logical channels. When the token bucket of the LCH 1 overflows, that is, Bⱼ of the LCH 1 reaches a maximum value, and an actual rate of the LCH 1 is less than a PBR, an overflowed token is placed into the token bucket of the LCH 2, that is, an actual PBR of the LCH 2 is PBR2+PBR1, and Bⱼ of the LCH 2 increases accordingly. When the token bucket of the LCH 2 overflows, an overflowed token is placed into a token bucket of the LCH 3. The rest may be deduced by analogy. When a token bucket of the LCH n overflows, an overflowed token is discarded.

For example, a base station may configure PBR=10 Mbps for the LCH 1, configure PBR=0 Mbps for the LCH 2, and indicate that the LCH 2 can share the token overflowed by the LCH 1.

It should be understood that, in this case, a transmission rate of the I-frame is preferentially guaranteed, and there is a redundant token for transmission of the P-frame only when the data of the I-frame does not need to consume a token of 10 Mbps. In this configuration manner, an overall rate of the video service is controlled, and a priority of the data of the I-frame is guaranteed absolutely.

For example, the base station may configure a large PBR, for example, 9 Mbps, for the LCH 1, and configure a low PBR, for example, 1 Mbps, for the LCH 2, and indicate the LCH 2 to share an overflowed token of the LCH 1.

It should be understood that, in this configuration manner, it is still guaranteed that the data of the P-frame can be transmitted at a low rate, and is not completely occupied by the data of the I-frame.

According to this embodiment of this application, a token overflowed from a higher-priority LCH is configured to be placed into a token bucket of a lower-priority LCH, so that transmission of higher-priority data can be preferentially guaranteed, and when tokens are sufficient, a redundant token is used for transmission of lower-priority data, to avoid a case in which transmission of lower-priority data cannot be guaranteed due to improper PBR setting.

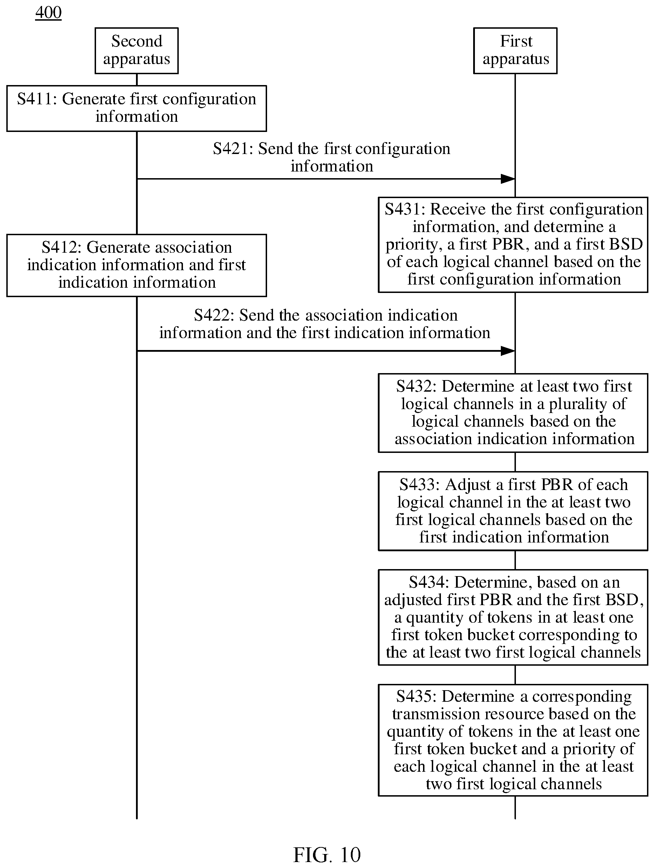

FIG. 10 is a schematic flowchart of another data transmission method according to an embodiment of this application.

The method 400 is shown in FIG. 10. S411: A second apparatus generates first configuration information. S421: The second apparatus sends the first configuration information. S431: Correspondingly, a first apparatus receives the first configuration information, and determines a priority of each logical channel, a first PBR of each logical channel, and a first BSD of each logical channel based on the first configuration information.

S412: The second apparatus generates association indication information and first indication information. S422: The second apparatus sends the association indication information and the first indication information. S432: Correspondingly, the first apparatus receives the association indication information and the first indication information, and determines at least two first logical channels in a plurality of logical channels based on the association indication information.

The at least two determined first logical channels are used to transmit a same service, and the same service may be a voice service, a video service, an XR service, or the like. A same service flow may include data packets of different importance degrees. One data flow may be split into two QoS flows, or may be mapped to two DRBs. This is not limited in this application.

It should be understood that the association indication information may be implicit, for example, may indicate a plurality of logical channels corresponding to a same DRB. Alternatively, the association indication information may be explicit. For example, the association indication information may carry IDs of at least two first logical channels that need to be indicated, or information about each logical channel carries one parameter indicating whether the logical channel belongs to the at least two indicated first logical channels, or indicating whether the logical channel performs joint PBR adjustment with another logical channel.

S433: The first apparatus adjusts a first PBR of each logical channel in the at least two first logical channels based on the first indication information.

It should be understood that, when a quantity of tokens in a first token bucket corresponding to a logical channel in the at least two first logical channels is greater than or equal to a first threshold, the first PBR of each first logical channel in the at least two first logical channels is adjusted based on the first indication information; or when a quantity of tokens in a token bucket corresponding to a logical channel in the at least two first logical channels is less than or equal to a second threshold, the first PBR of each first logical channel in the at least two first logical channels is adjusted based on the first indication information.

Optionally, when a quantity of tokens in a first token bucket corresponding to a logical channel in the at least two first logical channels is greater than or equal to a first threshold for a first time period, the first PBR of each first logical channel in the at least two first logical channels is adjusted based on the first indication information; or when a quantity of tokens in a token bucket corresponding to a logical channel in the at least two first logical channels is less than or equal to a second threshold for a first time period, the first PBR of each first logical channel in the at least two first logical channels is adjusted based on the first indication information.

Optionally, an adjusted first PBR determined is greater than or equal to 0.

For example, when a quantity of tokens in a token bucket corresponding to a first logical channel is less than or equal to the first threshold, a first PBR corresponding to the first logical channel is increased, and a first PBR corresponding to another logical channel in the at least two associated logical channels is decreased; or when a quantity of tokens in a token bucket corresponding to a first logical channel is greater than or equal to the first threshold, a first PBR corresponding to the first logical channel is decreased, and a first PBR corresponding to another logical channel in the at least two first logical channels is increased.

Optionally, when a quantity of tokens in a token bucket corresponding to a first logical channel is less than or equal to the first threshold for the first time period, a first PBR corresponding to the first logical channel is increased, and a first PBR corresponding to another logical channel in the at least two associated logical channels is decreased; or when a quantity of tokens in a token bucket corresponding to a first logical channel is greater than or equal to the first threshold for the first time period, a first PBR corresponding to the first logical channel is decreased, and a first PBR corresponding to another logical channel in the at least two first logical channels is increased.

Optionally, the first PBR is adjusted based on a first step, where the first step is determined based on the first indication information.

Optionally, the first PBR of each first logical channel in the at least two first logical channels may be adjusted to a third PBR, where the third PBR is determined based on the first indication information.

It should be understood that the foregoing thresholds and the first time period may be indicated by the first indication information.

S434: The first apparatus determines, based on the adjusted first PBR and the first BSD, a quantity of tokens in at least one token bucket corresponding to the at least two first logical channels.

S435: The first apparatus determines, based on the quantity of tokens in the at least one token bucket and a priority of each logical channel in the at least two first logical channels, a transmission resource corresponding to each logical channel.

According to this embodiment of this application, it can be guaranteed that a sum of PBRs of the plurality of logical channels matches an overall service expectation, and a PBR of each logical channel can be dynamically adjusted based on actual consumption of a token, to avoid a case in which transmission of some data cannot be guaranteed due to an inappropriate proportion. By setting an appropriate adjustment threshold and step, for example, setting a larger increase step and a larger increase threshold for a higher-priority LCH, higher-priority data can be dynamically preferentially guaranteed.

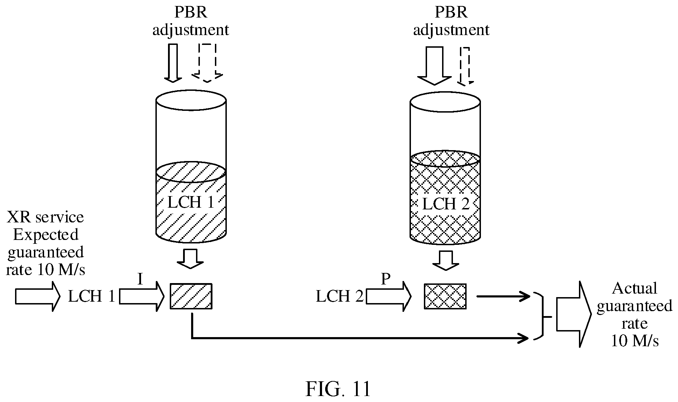

FIG. 11 is a simple diagram of transmitting an XR service by using a method according to an embodiment of this application.

As shown in FIG. 11, the XR service is used as an example, and the XR service is transmitted through two logical channels. For an XR video service based on a GOP coding model, data of an I-frame is transmitted through an LCH 1, data of a P-frame is transmitted through an LCH 2, and an expected guaranteed rate of the video service is 10 Mbps.

After receiving association indication information, based on the LCH 1 and the LCH 2 that are indicated by the association indication information, the first apparatus allows, for the two logical channels based on first indication information, the LCH 1 and the LCH 2 to jointly adjust a PBR.

In a possible implementation, the second apparatus may send RRC signaling to the first apparatus, and indicate an association between a plurality of logical channels by using the RRC signaling. The association between logical channels may be indicated in two manners:

### Manner 1

The association indication information may implicitly indicate the association between logical channels.

For example, it may be considered that a plurality of logical channels corresponding to a same DRB are associated.

Specifically, logical channels corresponding to RLC entities that carry a same DRB ID in a configuration information element of an RLC bearer are associated.

### Manner 2

The association indication information may explicitly indicate the association between logical channels.

For example, a configuration information element of a logical channel may carry an ID of the logical channel associated with the configuration information element.

For example, the second apparatus may configure one indication parameter in a configuration information element of a DRB or a logical channel. The indication parameter may indicate whether the logical channel is associated with another logical channel, or the indication parameter may indicate whether the logical channel performs associated PBR adjustment.

In a first-round LCP process, the plurality of associated logical channels may perform associated PBR adjustment.

For example, when Bⱼ of a logical channel in the plurality of associated logical channels is less than a threshold, a PBR of the logical channel is increased, and a PBR of another associated logical channel is decreased. When Bⱼ of a logical channel in the related logical channels is greater than a threshold, a PBR of the logical channel is decreased, and a PBR of another related logical channel is increased. When Bⱼ of a plurality of logical channels is less than a threshold, PBR adjustment is separately triggered. If an adjusted PBR of a logical channel is less than 0, no adjustment is performed.

For example, when Bⱼ of a logical channel in the associated logical channels is less than a threshold for a period of time, a PBR of the logical channel is increased, and a PBR of another associated logical channel is decreased. When Bⱼ of a logical channel in the associated logical channels is greater than a threshold for a period of time, a PBR of the logical channel is decreased, and a PBR of another related logical channel is increased. When Bⱼ of a plurality of logical channels meets the foregoing condition, PBR adjustment is separately triggered. If an adjusted PBR of a logical channel is less than 0, no adjustment is performed.

It should be understood that the threshold and duration of the period of time may be configured by the second apparatus by using the RRC signaling, for example, configured in a configuration information element of a logical channel. The threshold can be an absolute value in a unit of bytes, kbytes, Mbytes, or the like, or may be a percentage of a logical channel bucket size (PBR×BSD).

It should be understood that, when a PBR of each logical channel is increased or decreased, adjustment may be performed based on a specific step. The step may be configured by the second apparatus by using the RRC signaling, for example, configured in the configuration information element of the DRB or the logical channel. Configuration information of the step may be a value in a unit of kBps, MBps, Mbps, or the like.

Alternatively, when a PBR of each logical channel is increased or decreased, the PBR of the logical channel may alternatively be adjusted based on a predetermined level. The level may be configured by the second apparatus by using the RRC signaling. For example, in the configuration information element of the DRB or the logical channel, configuration information includes a multi-level PBR configuration, where each level represents one PBR value.

For example, a base station may configure PBR=5 Mbps for the LCH 1, configure PBR=5 Mbps for the LCH 2, and indicate that the LCH 1 is associated with the LCH 2 and associated adjustment can be performed. The following separately uses examples to describe configuration manners of step-based adjustment and level-based adjustment.

Manner 1: Step-based adjustment: The second apparatus configures a PBR increase step as 2 Mbps and a decrease step as 1 Mbps for the LCH 1, and a PBR increase step as 1 Mbps and a decrease step as 2 Mbps for the LCH 2. The second apparatus configures a PBR increase threshold as 1 Mbyte and a PBR decrease threshold as 100% of a bucket size for the LCH 1. If Bⱼ of the LCH 1 is less than 1 Mbyte (or less than 1 Mbyte for a period of time), the PBR of the LCH 1 is increased to 7 Mbps, and the PBR of the LCH 2 is decreased to 3 Mbps. If Bⱼ of the LCH 1 reaches a maximum value (or reaches the maximum value for a period of time), the PBR of the LCH 1 is decreased to 6 Mbps, and the PBR of the LCH 2 is increased to 4 Mbps. The rest may be deduced by analogy.

Manner 2: Level-based adjustment: The second apparatus configures PBR adjustment levels of the LCH 1 and the LCH 2 as follows:
Level 1: {LCH 1=3 Mbps, LCH 2=7 Mbps};
Level 2: {LCH 1=5 Mbps, LCH 2=5 Mbps}; and
Level 3: {LCH 1=7 Mbps, LCH 2=3 Mbps}.

An initial configuration may be Level 2. The second apparatus configures the PBR increase threshold as 1 Mbyte and the PBR decrease threshold as 100% of the bucket size for the LCH 1. If Bⱼ of the LCH 1 is less than 1 Mbyte (or less than 1 Mbyte for a period of time), the PBRs of the LCH 1 and the LCH 2 are increased by one level, that is, the PBR of the LCH 1 is increased to 7 Mbps, and the PBR of the LCH 2 is decreased to 3 Mbps. If Bⱼ of the LCH 1 reaches the maximum value (or reaches the maximum value for a period of time), the PBRs of the LCH 1 and the LCH 2 are decreased by one level, that is, the PBR of the LCH 1 is decreased to 5 Mbps, and the PBR of the LCH 2 is increased to 5 Mbps. The rest may be deduced by analogy.

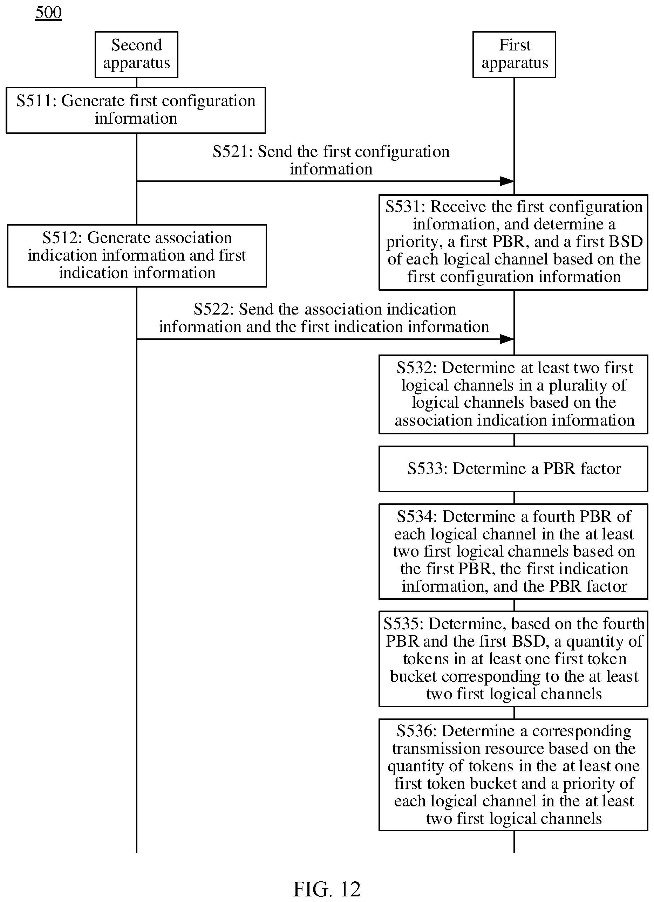

FIG. 12 is a schematic flowchart of another data transmission method according to an embodiment of this application.

The method 500 is shown in FIG. 12. S511: A second apparatus generates first configuration information. S521: The second apparatus sends the first configuration information. S531: Correspondingly, a first apparatus receives the first configuration information, and determines a priority of each logical channel, a first PBR of each logical channel, and a first BSD of each logical channel based on the first configuration information.

S512: The second apparatus generates association indication information and first indication information. S522: The second apparatus sends the association indication information and the first indication information. S532: Correspondingly, the first apparatus receives the association indication information and the first indication information, and determines at least two first logical channels in a plurality of logical channels based on the association indication information.

The at least two determined first logical channels are used to transmit a same service, and the same service may be a voice service, a video service, an XR service, or the like. A same service flow may include data packets of different importance degrees. One data flow may be split into two QoS flows, or may be mapped to two DRBs. This is not limited in this application.

It should be understood that the association indication information may be implicit, for example, may indicate a plurality of logical channels corresponding to a same DRB. Alternatively, the association indication information may be explicit. For example, the association indication information may carry IDs of at least two first logical channels that need to be indicated, or information about each logical channel carries one parameter indicating whether the logical channel belongs to the at least two indicated first logical channels, or indicating that the logical channel performs PBR adjustment based on a PBR factor.

S533: The first apparatus determines the PBR factor.

It should be understood that the PBR factor may be a proportion of an amount of data that needs to be transmitted on each logical channel in the at least two first logical channels in a total amount of data.

Optionally, the first apparatus may determine the PBR factor through a PDCP layer or an application layer, and indicate the PBR factor to a MAC entity.

S534: The first apparatus determines a fourth PBR of each logical channel in the at least two first logical channels based on the first PBR, the first indication information, and the PBR factor.

The fourth PBR is a product of the first PBR and the PBR factor, that is, fourth PBR= first PBR×PBR factor.

S535: The first apparatus determines, based on the fourth PBR and the first BSD, a quantity of tokens in at least one first token bucket corresponding to the at least two first logical channels.

S536: The first apparatus determines, based on the quantity of tokens in the at least one first token bucket and a priority of each logical channel in the at least two first logical channels, a transmission resource corresponding to each logical channel.

According to this embodiment of this application, it can be guaranteed that a sum of PBRs of the plurality of logical channels matches an overall service expectation, and a PBR of each logical channel can be dynamically adjusted based on actual distribution of service data, to avoid a case in which transmission of some data cannot be guaranteed due to an inappropriate proportion. If different logical channels are associated with different MAC entities, for example, in a DC dual connectivity (dual connectivity, dc) scenario, interaction across MAC entities may be introduced, and implementation difficulty of UE is increased. Interaction between the MAC entities may be avoided by sensing data distribution by a higher layer and indicating a corresponding MAC entity to adjust a PBR.

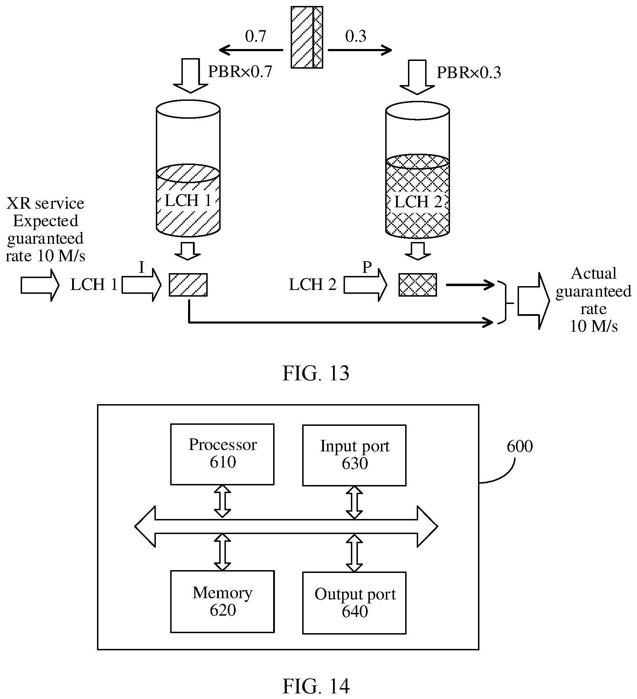

FIG. 13 is a simple diagram of transmitting an XR service by using a method according to an embodiment of this application.

As shown in FIG. 13, the XR service is used as an example, and the XR service is transmitted through two logical channels. For an XR video service based on a GOP coding model, data of an I-frame is transmitted through an LCH 1, data of a P-frame is transmitted through an LCH 2, and an expected guaranteed rate of the video service is 10 Mbps.

After receiving association indication information, based on the LCH 1 and the LCH 2 that are indicated by the association indication information, the first apparatus allows, for the two logical channels based on first indication information, the LCH 1 and the LCH 2 to adjust a PBR based on a PBR factor.

In a possible implementation, the second apparatus may send RRC signaling to the first apparatus, and indicate an association between a plurality of LCHs by using the RRC signaling. The association between logical channels may be indicated in two manners:

### Manner 1

The association indication information may implicitly indicate the association between logical channels.

For example, it may be considered that a plurality of logical channels corresponding to a same DRB are associated.

Specifically, logical channels corresponding to RLC entities that carry a same DRB ID in a configuration information element of an RLC bearer are associated.

### Manner 2

The association indication may explicitly indicate the association between logical channels.

For example, a configuration information element of a logical channel may carry an ID of the logical channel associated with the configuration information element.

For example, a network device may configure one indication parameter in a configuration information element of a DRB or a logical channel. The indication parameter may indicate whether the logical channel is associated with another logical channel, or the indication parameter may indicate whether the logical channel adjusts a PBR based on a PBR factor indicated by a higher layer.

When a MAC entity receives the PBR factor indicated by the higher layer, the MAC entity configures PBR values of the plurality of associated logical channels as a PBR×PBR factor.

For example, the first apparatus may determine a PBR factor of a logical channel in one of the following two manners:
Manner 1: The PBR factor may be indicated by a PDCP entity to the MAC entity. Specifically, when data arrives at the PDCP entity, the PDCP entity may identify a proportion of an amount of data that is to be transmitted through each logical channel in the associated logical channels. The PDCP entity may indicate the proportion as a PBR factor of a corresponding logical channel to the MAC entity. After receiving an indication, the MAC entity adjusts a PBR value of the corresponding logical channel to a configured PBR×PBR factor. The PDCP entity may indicate the MAC entity for a plurality of times to modify the PBR factor of the logical channel.

An occasion for sending an indicated PBR factor by the PDCP entity may be determined by implementation of the first apparatus. For example, each time new data arrives, the PDCP entity indicates the PBR factor, the PDCP entity indicates the PBR factor periodically, or when a data proportion changes greatly, the PDCP entity indicates the PBR factor.

The XR service is used as an example. The XR service is transmitted through two channels. There is an XR video service coded based on a slice model. I-slice data of the video service is transmitted through the LCH 1, and P-slice data is transmitted through the LCH 2. An expected guaranteed rate of the video service is 10 Mbps. A base station may configure PBR=10 Mbps for the LCH 1, configure PBR=10 Mbps for the LCH 2, indicate that the LCH 1 is associated with the LCH 2, and need to adjust the PBR based on the PBR factor indicated by the PDCP layer. When receiving a data burst or a frame, the PDCP entity perceives and finds that the I-slice data accounts for about 70% and the P-slice data accounts for about 30%. Therefore, the PDCP entity indicates, to MAC entities corresponding to the LCH 1 and the LCH 2, that a PBR factor of the LCH 1 is 0.7 and a PBR factor of the LCH 2 is 0.3. After receiving the indication, the MAC entity adjusts an actual PBR of the LCH 1 to 7 Mbps, and adjusts an actual PBR of the LCH 2 to 3 Mbps.

It should be understood that when a plurality of associated logical channels correspond to different MAC entities, the PDCP entity indicates a PBR factor of a logical channel to a MAC entity corresponding to the logical channel.

Manner 2: The PBR factor may be indicated by an application layer to the MAC entity. Specifically, the application layer may directly indicate a PBR factor of a related logical channel based on a service feature, and after receiving the indication, the MAC entity adjusts the PBR value of the corresponding logical channel to the configured PBR×PBR factor.

The application layer may indicate for a plurality of times to modify the PBR factor of the logical channel. An occasion for indicating the PBR factor by the application layer may be determined by implementation of the application layer. For example, each time new data is generated, the application layer indicates the PBR factor, the application layer indicates the PBR factor periodically, or when the data proportion changes greatly, the application layer indicates the PBR factor.

The XR service is used as an example. The XR service is transmitted through two channels. There is an XR video service coded based on the slice model, and there is an XR video service coded based on the slice model. I-slice data of the video service is transmitted through the LCH 1, and P-slice data is transmitted through the LCH 2. An expected guaranteed rate of the video service is 10 Mbps. The base station may configure PBR=10 Mbps for the LCH 1, configure PBR=10 Mbps for the LCH 2, indicate that the LCH 1 is associated with the LCH 2, and need to adjust the PBR based on an indication of the application layer. When generating a new frame, the application layer perceives and finds that the I-slice data accounts for about 70% and the P-slice data accounts for about 30%. Therefore, the application layer indicates, to the MAC entities corresponding to the LCH 1 and the LCH 2, that the PBR factor of the LCH 1 is 0.7 and the PBR factor of the LCH 2 is 0.3. After receiving the indication, the MAC entity adjusts the actual PBR of the LCH 1 to 7 Mbps, and adjusts the actual PBR of the LCH 2 to 3 Mbps.

It should be understood that when a plurality of related logical channels are associated with different MAC entities, the application layer indicates the PBR factor of the logical channel to the MAC entity associated with the logical channel.

According to the foregoing method, FIG. 14 is a diagram of a wireless communication apparatus 600 according to an embodiment of this application.

The apparatus 600 may be a second apparatus, or may be a module, a chip, or a circuit, for example, a module, a chip, or a circuit that may be disposed in the second apparatus.

The apparatus 600 may include a processing unit 610 (that is, an example of a processing unit), and optionally, may further include a storage unit 620. The storage unit 620 is configured to store instructions.

In a possible manner, the processing unit 610 is configured to execute the instructions stored in the storage unit 620, so that the apparatus 300 implements the steps performed by the terminal device in the foregoing methods.

Further, the apparatus 600 may further include an input port 630 (that is, an example of a receiving unit) and an output port 640 (that is, an example of a sending unit). Further, the processing unit 610, the storage unit 620, the input port 630, and the output port 640 may communicate with each other through an internal connection path, to transmit a control signal and/or a data signal. The storage unit 620 is configured to store a computer program. The processing unit 610 may be configured to invoke the computer program from the storage unit 620 and run the computer program, to complete the steps performed by the terminal device in the foregoing methods. The storage unit 620 may be integrated into the processing unit 610, or may be disposed separately from the processing unit 610.

Optionally, in a possible manner, the input port 630 may be a receiver, and the output port 640 is a transmitter. The receiver and the transmitter may be a same physical entity or different physical entities. When the receiver and the transmitter are a same physical entity, the receiver and the transmitter may be collectively referred to as a transceiver.

Optionally, in a possible manner, the input port 630 is an input interface, and the output port 640 is an output interface.

In an implementation, it may be considered that functions of the input port 630 and the output port 640 are implemented by using a transceiver circuit or a dedicated transceiver chip. It may be considered that the processing unit 610 is implemented by a dedicated processing chip, a processing circuit, a processing unit, or a general-purpose chip.

In another implementation, it may be considered that a communication device (for example, a second apparatus) provided in this embodiment of this application is implemented by using a general-purpose computer. To be specific, program code for implementing functions of the processing unit 610, the input port 630, and the output port 640 is stored in the storage unit 620, and a general-purpose processing unit executes the code in the storage unit 620 to implement the functions of the processing unit 610, the input port 630, and the output port 640.

For concepts, explanations, detailed descriptions, and other steps of the apparatus 300 that are related to the technical solutions provided in embodiments of this application, refer to the descriptions of the content in the foregoing methods or other embodiments. Details are not described herein again.

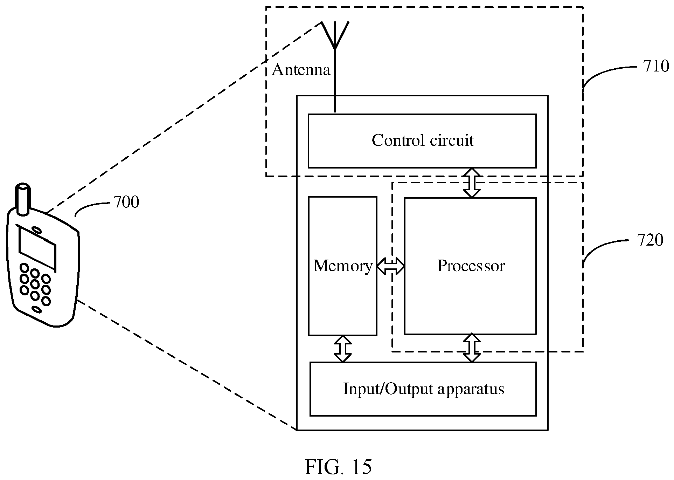

FIG. 15 is a diagram of a structure of a communication apparatus 700 according to this application.

The apparatus 700 may be a first apparatus, or may be a module, a chip, or a circuit, for example, a module, a chip, or a circuit that may be disposed in the first apparatus.

For ease of description, FIG. 15 shows only main components of a terminal device. As shown in FIG. 15, the terminal device 700 includes a processor, a memory, a control circuit, an antenna, and an input/output apparatus.

The processor is mainly configured to: process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to: convert a baseband signal and a radio frequency signal and process the radio frequency signal. The control circuit and the antenna together may also be referred to as a transceiver, and are mainly configured to: receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor may read a software program in a storage unit, explain and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 15 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 15. A person skilled in the art may understand that the baseband processor and the central processing unit may be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applicable to a first apparatus, and comprises:
receiving first configuration information, wherein the first configuration information is used to configure a priority of each logical channel in a plurality of logical channels, a first prioritized bit rate PBR of each logical channel, and a first bucket size duration BSD of each logical channel;
receiving association indication information and first indication information, wherein the association indication information indicates at least two first logical channels in the plurality of logical channels;
determining, based on at least one of the first PBR, the first BSD, or the first indication information, a quantity of tokens in at least one first token bucket corresponding to the at least two first logical channels; and
determining, based on the quantity of tokens in the at least one token bucket and a priority of each logical channel in the at least two first logical channels, transmission resources corresponding to the at least two first logical channels.

2. The method according to claim 1, wherein a quantity of the at least one first token bucket is 1.

3. The method according to claim 1 or 2, wherein determining, based on the at least one of the first PBR, the first BSD, and the first indication information, the quantity of tokens in the at least one first token bucket corresponding to the at least two first logical channels comprises:
determining a second PBR of each first logical channel in the at least two first logical channels and a second BSD of each first logical channel in the at least two first logical channels based on the at least one of the first PBR, the first BSD, and the first indication information, wherein
the at least two first logical channels correspond to one second PBR, and the at least two first logical channels correspond to one second BSD; and
determining, based on the second PBR and the second BSD, the quantity of tokens in the at least one first token bucket corresponding to the at least two first logical channels.

4. The method according to claim 1, wherein the method further comprises:
adding, based on the first indication information to a first token bucket corresponding to a logical channel with a lower priority in the at least two first logical channels, a token that is in a first token bucket corresponding to a logical channel with a higher priority in the at least two first logical channels and that exceeds a maximum capacity of the first token bucket, wherein the maximum capacity of the token bucket is determined based on the first PBR and the first BSD.

5. The method according to claim 1, wherein the method further comprises:
when a quantity of tokens in a first token bucket corresponding to a logical channel in the at least two first logical channels is greater than or equal to a first threshold,
adjusting a first PBR of each first logical channel in the at least two first logical channels based on the first indication information; or
when a quantity of tokens in a token bucket corresponding to a logical channel in the at least two first logical channels is less than or equal to a second threshold,
adjusting a first PBR of each first logical channel in the at least two first logical channels based on the first indication information;
determining, based on an adjusted first PBR and the first BSD, the quantity of tokens in the at least one first token bucket corresponding to the at least two first logical channels; and
determining, based on the quantity of tokens in the at least one token bucket and the priority of each logical channel in the at least two first logical channels, the transmission resources corresponding to the at least two first logical channels.

6. The method according to claim 5, wherein the method further comprises:
when a quantity of tokens in a first token bucket corresponding to a logical channel in the at least two first logical channels is greater than or equal to a first threshold for a first time period,
adjusting the first PBR of each first logical channel in the at least two first logical channels based on the first indication information; or
when a quantity of tokens in a token bucket corresponding to a logical channel in the at least two first logical channels is less than or equal to a second threshold for a first time period,
adjusting a first PBR of each first logical channel in the at least two first logical channels based on the first indication information;
determining, based on an adjusted first PBR and the first BSD, the quantity of tokens in the at least one first token bucket corresponding to the at least two first logical channels; and
determining, based on the quantity of tokens in the at least one token bucket and the priority of each logical channel in the at least two first logical channels, the transmission resources corresponding to the at least two first logical channels.

7. The method according to claim 5 or 6, wherein the adjusted first PBR is greater than or equal to 0.

8. The method according to any one of claims 5 to 7, wherein adjusting the first PBR of each first logical channel in the at least two first logical channels based on the first indication information comprises:
when a quantity of tokens in a token bucket corresponding to a first logical channel is less than or equal to the first threshold, increasing a first PBR corresponding to the first logical channel, and decreasing a first PBR corresponding to another logical channel in the at least two associated logical channels; or
when a quantity of tokens in a token bucket corresponding to a first logical channel is greater than or equal to the first threshold, decreasing a first PBR corresponding to the first logical channel, and increasing a first PBR corresponding to another logical channel in the at least two first logical channels.

9. The method according to any one of claims 5 to 8, wherein adjusting the first PBR of each first logical channel in the at least two first logical channels based on the first indication information comprises:
when a quantity of tokens in a token bucket corresponding to a first logical channel is less than or equal to the first threshold for the first time period, increasing a first PBR corresponding to the first logical channel, and decreasing a first PBR corresponding to another logical channel in the at least two associated logical channels; or
when a quantity of tokens in a token bucket corresponding to a first logical channel is greater than or equal to the first threshold for the first time period, decreasing a first PBR corresponding to the first logical channel, and increasing a first PBR corresponding to another logical channel in the at least two first logical channels.

10. The method according to any one of claims 5 to 9, wherein the method further comprises: adjusting the first PBR based on a first step, wherein the first step is determined based on the first indication information.

11. The method according to any one of claims 5 to 9, wherein the method further comprises: adjusting the first PBR of each first logical channel in the at least two first logical channels to a third PBR, wherein the third PBR is determined based on the first indication information.

12. The method according to claim 1, wherein the method further comprises:
determining a PBR factor, wherein the PBR factor is a proportion of an amount of data that needs to be transmitted on each logical channel in the at least two first logical channels in a total amount of data;
determining a fourth PBR of each logical channel in the at least two first logical channels based on the first PBR, the first indication information, and the PBR factor;
determining, based on the fourth PBR and the first BSD, the quantity of tokens in the at least one first token bucket corresponding to the at least two first logical channels; and
determining, based on the quantity of tokens in the at least one first token bucket and the priorities of the at least two first logical channels, the transmission resources corresponding to the at least two first logical signals.

13. A data transmission method, wherein the method is applicable to a second apparatus, and comprises:
sending first configuration information, wherein the first configuration information is used to configure a priority of each logical channel in a plurality of logical channels, a first PBR of each logical channel, and a first BSD of each logical channel; and
sending association indication information and first indication information, wherein the association indication information indicates at least two first logical channels in the plurality of logical channels, and the first indication information is used to determine a quantity of tokens in at least one first token bucket corresponding to the at least two first logical channels, wherein
the quantity of tokens in the at least one token bucket is used together with a priority of each logical channel in the at least two first logical channels to determine transmission resources corresponding to the at least two first logical channels.

14. The method according to claim 13, wherein a quantity of the at least one first token bucket is 1.

15. The method according to claim 13 or 14, wherein the first indication information is further used to determine a second PBR of each first logical channel in the at least two first logical channels and a second BSD of each first logical channel in the at least two first logical channels, wherein
the at least two first logical channels correspond to one second PBR, and the at least two first logical channels correspond to one second BSD; and
the second PBR and the second BSD are used to determine the quantity of tokens in the at least one first token bucket corresponding to the at least two first logical channels.

16. The method according to claim 13, wherein the first indication information indicates to add, to a first token bucket corresponding to a logical channel with a lower priority in the at least two first logical channels, a token that is in a first token bucket corresponding to a logical channel with a higher priority in the at least two first logical channels and that exceeds a maximum capacity of the first token bucket, wherein the maximum capacity of the token bucket is determined based on the first PBR and the first BSD.

17. The method according to claim 13, wherein the first indication information is used to:
when a quantity of tokens in a first token bucket corresponding to a logical channel in the at least two first logical channels is greater than or equal to a first threshold,
adjust a first PBR of each first logical channel in the at least two first logical channels; or
when a quantity of tokens in a token bucket corresponding to a logical channel in the at least two first logical channels is less than or equal to a second threshold,
adjust a first PBR of each first logical channel in the at least two first logical channels,
wherein
an adjusted first PBR and the first BSD are used to determine the quantity of tokens in the at least one first token bucket corresponding to the at least two first logical channels; and
the quantity of tokens in the at least one token bucket and the priority of each logical channel in the at least two first logical channels are used to determine the transmission resources corresponding to the at least two first logical channels.

18. The method according to claim 13, wherein the first indication information is used to:
when a quantity of tokens in a first token bucket corresponding to a logical channel in the at least two first logical channels is greater than or equal to a first threshold for a first time period,
adjust a first PBR of each first logical channel in the at least two first logical channels; or
when a quantity of tokens in a token bucket corresponding to a logical channel in the at least two first logical channels is less than or equal to a second threshold for a first time period,
adjust a first PBR of each first logical channel in the at least two first logical channels,
wherein
an adjusted first PBR and the first BSD are used to determine the quantity of tokens in the at least one first token bucket corresponding to the at least two first logical channels; and
the quantity of tokens in the at least one token bucket and the priority of each logical channel in the at least two first logical channels are used to determine the transmission resources corresponding to the at least two first logical channels.

19. The method according to claim 17 or 18, wherein the adjusted first PBR is greater than or equal to 0.

20. The method according to any one of claims 17 to 19, wherein the method further comprises: adjusting the first PBR based on a first step, wherein the first step is determined based on the first indication information.

21. The method according to any one of claims 17 to 19, wherein the first indication information is used to adjust the first PBR of each first logical channel in the at least two first logical channels to a third PBR, wherein the third PBR is determined based on the first indication information.

22. The method according to claim 13, wherein the first indication information indicates a first apparatus to determine a fourth PBR of each logical channel in the at least two first logical channels based on the first PBR and a PBR factor, wherein the PBR factor is a proportion of an amount of data that needs to be transmitted on each logical channel in the at least two first logical channels in a total amount of data;
the fourth PBR and the first BSD are used to determine the quantity of tokens in the at least one first token bucket corresponding to the at least two first logical channels; and
the quantity of tokens in the at least one first token bucket and the priorities of the at least two first logical channels are used to determine the transmission resources corresponding to the at least two first logical signals.

23. A data transmission apparatus, comprising:
a unit configured to implement the method according to any one of claims 1 to 12; or
a unit configured to implement the method according to any one of claims 13 to 22.

24. A data transmission system, comprising a first apparatus and a second apparatus, wherein
the first apparatus is configured to implement the method according to any one of claims 1 to 12; and
the second apparatus is configured to implement the method according to any one of claims 13 to 22.

25. A computer-readable storage medium, wherein the computer-readable storage medium stores a computer program; and when the computer program is run,
an apparatus is enabled to perform the method according to any one of claims 1 to 12; or
an apparatus is enabled to perform the method according to any one of claims 13 to 22.

26. A chip system, comprising a memory and a processor, wherein the memory is configured to store a computer program, and the processor is configured to: invoke the computer program from the memory and run the computer program,
to enable a communication apparatus on which the chip system is installed to perform the method according to any one of claims 1 to 12; or
to enable a communication apparatus on which the chip system is installed to perform the method according to any one of claims 13 to 22.
